# EUROPEAN PATENT APPLICATION

(11) **EP 4 480 563 A1**
(43) Date of publication of application: **25.12.2024**
(21) Application number: 22927271.1
(22) Date of filing: 20.10.2022
(51) Int. Cl.: B01D 11/04, C22B 3/26, C22B 3/38, H01M 10/54

(54) **RECOVERY METHOD FOR EXTRACTANT IN AQUEOUS SOLUTION AND SEPARATION AND RECOVERY METHOD FOR METAL FROM METAL AQUEOUS SOLUTION**

(30) Priority: 18.02.2022 JP 2022024212; 09.05.2022 JP 2022077158
(71) Applicant: JX METALS CIRCULAR SOLUTIONS CO., LTD, Tokyo 105-8417 (JP)
(72) Inventor: ARAKAWA,Junichi, Hitachi-shi, Ibaraki 317-0056 (JP)
(74) Representative: Arnold & Siedsma
(86) International application number: PCT/JP2022/039179
(87) International publication number: WO 2023/157377

(57) **Abstract**

A method for recovering neodecanoic acid or a phosphonate ester-based extractant from an aqueous solution containing the neodecanoic acid or the phosphonate ester-based extractant, wherein an equilibrium pH is 5.5 or less when the neodecanoic acid or the phosphonate ester-based extractant is recovered.

## Description

### [Technical Field]

The present invention relates to a method for recovering an extractant in an aqueous solution and a method for separating and recovering metals from an aqueous metal solution.

### [Background Art]

Applications of lithium ion batteries are rapidly expanding for use in hybrid vehicles. Furthermore, the production of large batteries is expected to increase rapidly due to an increase in capacity of the unit. Also, as a demand for lithium ion batteries increases, there is a need for establishing a method for recovering valuable metals from lithium ion batteries.

The lithium ion battery is mainly composed of a cathode, an anode, a separator, and a housing. The cathode has a structure in which cathode active materials including manganese, cobalt, nickel, and lithium are bonded onto a current collector such as aluminum foil through a binder such as fluorine-based binder.

A proposed method for recycling lithium ion batteries is to carry out acid leaching using raw materials after incineration, crushing, and sorting of used lithium ion batteries, followed by extraction and separation of each metal from the resulting leached solution by solvent extraction.

In this regard, Patent Literature 1 describes the use of neodecanoic acid as an extractant for an aqueous solution containing lithium and nickel, thereby selectively extracting nickel into an oil phase.

### [Citation List]

### [Patent Literature]

[PTL 1]
Japanese Patent Application Publication No. 2011-74410 A

### [Summary of Invention]

### [Technical Problem]

Solvents after being used for extraction can be reused through stripping and scavenging. Therefore, the method for recovering metals by solvent extraction is an economical method. However, according to the inventor's research, it has been found that although neodecanoic acid and phosphonate ester-based extractants that may be contained in a solvent are slightly soluble in water, considerable amounts of the extractants are dissolved and lost from the organic phase (solvent) to the aqueous phase side, during solvent extraction with the solvent containing those extractants. This will lead to an increased consumption of the extractant to increase processing costs.

Therefore, the present invention provides a method for recovering neodecanoic acid and/or phosphonate ester-based extractants dissolved in an aqueous solution, and a method for separating and recovering metals from an aqueous metal solution.

### [Solution to Problem]

The method for recovering an extractant in an aqueous solution is a method for recovering neodecanoic acid or a phosphonate ester-based extractant from an aqueous solution comprising the neodecanoic acid or the phosphonate ester-based extractant, wherein an equilibrium pH is 5.5 or less when the neodecanoic acid or the phosphonate ester-based extractant is recovered.

The method for separating and recovering metals from the aqueous metal solution is a method for separating and recovering metals from an aqueous metal solution, the method comprising: a solvent extraction step of subjecting the aqueous metal solution to solvent extraction with a solvent comprising neodecanoic acid or a phosphonate ester-based extractant to extract metals contained in the aqueous metal solution; and a recovery step of recovering the neodecanoic acid or the phosphonate ester-based extractant from an extracted solution obtained after extracting the metals in the solvent extraction step, wherein an equilibrium pH during recovery in the recovery step is lower than an equilibrium pH during extraction in the solvent extraction step.

### [Advantageous Effects of Invention]

According to the method for recovering the extractant in the aqueous solution and the method for separating and recovering metals from the aqueous metal solution as described above, neodecanoic acid and a phosphonate ester-based extractant dissolved in the aqueous solution can be recovered.

### [Brief Description of Drawings]

[FIG. 1]

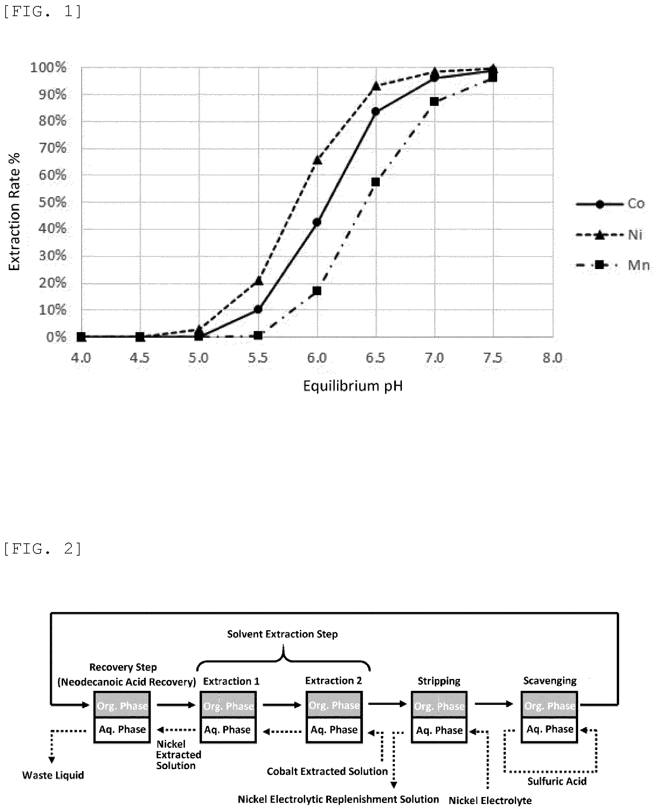

   FIG. 1 is a graph showing a relationship between an extraction rate of each metal and an equilibrium pH when nickel, cobalt, and manganese are extracted using neodecanoic acid as an extractant.
[FIG. 2]
   FIG. 2 is a flow chart of a method for separating and recovering metals according to an embodiment of the present invention.
[FIG. 3]

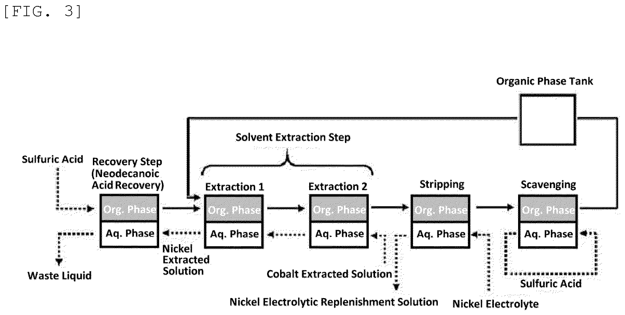

   FIG. 3 is a flow chart showing another example of a method for separating and recovering metals.

### [Description of Embodiments]

An embodiment of the method for recovering an extractant in an aqueous solution according to the present invention is a method for recovering neodecanoic acid or a phosphonate ester-based extractant from an aqueous solution containing the neodecanoic acid or the phosphonate ester-based extractant, wherein an equilibrium pH is 5.5 or less when the neodecanoic acid or the phosphonate ester-based extractant is recovered.

The background of creation of the above method is as follows:
The present inventors have found that when the equilibrium pH selected for extracting metals is equal to or higher than a specific value, the solubility of neodecanoic acid or a phosphonate ester-based extractant in water increases. More specifically, they have found that when the equilibrium pH of the aqueous nickel solution during extraction is set to 6 to 8 to increase the efficiency of nickel extraction, for example, the solubility of neodecanoic acid in water is higher in that pH range, so that the neodecanoic acid will migrate to the aqueous phase.

In this regard, the present inventors have found that the neodecanoic acid or the phosphonate ester-based extractant has higher oil solubility in the lower pH range, and have found that the neodecanoic acid or the phosphonate ester-based extractant that has migrated to the aqueous phase can transferred back to the organic phase by adjusting the pH, so that the extractant can be effectively recovered. Based on these findings, in the method of the embodiment, the equilibrium pH when recovering the neodecanoic acid or the phosphonate ester extractant is made lower than the equilibrium pH when recovering metals.

Thus, in the method for separating and recovering metals from the aqueous metal solution using solvent extraction, it is possible to recover the neodecanoic acid or the phosphonate ester-based extractant dissolved in the extracted solution after solvent extraction, carry out the solvent extraction economically, and ensure stable operation. This method is particularly applicable to a recycling technique for waste materials including cathode active materials for lithium ion batteries.

The details for the above embodiment are described below with specific examples.

### <Solvent Extraction Step>

In the solvent extraction step, the aqueous metal solution is subjected to solvent extraction with a solvent containing neodecanoic acid or a phosphonate ester-based extractant to extract target metals. The extraction means that at least a part of the target metals present in the aqueous metal solution may migrate to the organic phase, but it is not necessary that all the metals migrate to the organic phase. Types of the metals in the aqueous metal solution are not particularly limited, but the present invention can be suitably used for cases where the equilibrium pH during solvent extraction of the target metal is a specified value or higher (e.g., equilibrium pH is 6 or higher) and neodecanoic acid or the phosphonate ester-based extractant is easily transferred to the aqueous phase.

For example, when nickel is extracted with neodecanoic acid, the equilibrium pH during the solvent extraction is set to 6 to 8 in order to increase the extraction efficiency of nickel. At this time, neodecanoic acid is easily transferred to the aqueous phase. By applying the present invention herein, it will be possible to recover neodecanoic acid and increase the reuse rate.

The aqueous metal solution includes, but not particularly limited to, those derived from a leached solution obtained by acid-leaching waste materials containing cathode active materials for lithium ion batteries. Specific examples include leached solutions obtained by subjecting the following materials to acid leaching with a sulfuric acid or the like: those obtained by incinerating and drying waste cathode active materials from cathode active material manufacturers, cathode active materials from battery manufacturers; cathode materials in which cathode active materials are bonded to current collectors such as aluminum foil via binders, cathode active materials separated from cathode materials; and those obtained by separating cathode active materials such as by subjecting batteries themselves, generally called battery slag or crushed battery powder, to incineration, crushing, sieving, etc., as needed. It may also be those obtained after at least a part of manganese, cobalt, copper, aluminum, iron, and the like has been recovered from the leached solution. These metals can be recovered by combining known processes such as neutralization, solvent extraction, and sulfurization. Typically, an aqueous nickel solution as an example of aqueous metal solutions is an extracted solution obtained after extracting cobalt by solvent extraction. In this case, the aqueous nickel solution may also contain lithium. Another typical example of the aqueous metal solution is an aqueous cobalt solution obtained by extracting cobalt by solvent extraction and then stripping it. In this case, the aqueous cobalt solution often also contains magnesium. In addition, an aqueous manganese solution containing manganese and an aqueous nickel-cobalt solution containing nickel and cobalt are also typical examples of the aqueous metal solution.

The aqueous solution containing nickel and lithium may be directly used as the target of solvent extraction as the aqueous metal solution in the solvent extraction step, but both metals may be subjected to solvent extraction, and then subjected to a stripping operation, in order to concentrate them. Examples of the extractant at this time include 2-ethylhexyl 2-ethylhexylphosphonate and di-2-ethylhexyl phosphoric acid. By repeating stripping of the organic phase that has extracted nickel and lithium, the concentrations of nickel and lithium in the stripping solution increase, so that nickel and lithium can be concentrated. The equilibrium pH during this stripping is preferably 2 to 4. If the pH is lower than this value, the acid becomes useless for stripping nickel and lithium, which is costly. Furthermore, if the pH is higher than that value, the migration of nickel and lithium to the aqueous phase is insufficient, so that the concentrations of nickel and lithium in the stripping solution do not increase sufficiently. When the above concentrating step is carried out, the stripping solution that has concentrated nickel and lithium is the target of solvent extraction as the aqueous metal solution in the solvent extraction step.

The extractant used in the solvent extraction step is a carboxylic acid-based extractant of neodecanoic acid, preferably Versatic Acid 10 (also called VA-10) manufactured by Shell Chemical, in terms of extraction of at least one of nickel, cobalt, and manganese. Alternatively, it may be a phosphonate ester-based extractant, more specifically 2-ethylhexyl phosphonate (trade name: PC-88A, Ionquest 801). The extractant can typically be used after diluting it with a hydrocarbon organic solvent. Examples of the organic solvent include aromatic, paraffinic, and naphthenic solvents, and for example, Shellsol D70 ("Shellsol" is a registered trademark of Shell Chemical) can be used. In one embodiment of the present invention, the extractant can be diluted so that a concentration of the organic acid in the extractant is 10 to 30% by volume, and it is preferable to dilute it to 20 to 25% by volume for reasons of viscosity, phase separation, extraction speed, and extraction capacity.

The extraction procedure may be performed according to a conventional method. For example, an aqueous metal solution (aqueous phase) and a solvent (organic phase) are brought into contact with each other, and typically stirred and mixed in a mixer (e.g., at 200 to 500 rpm for 5 to 60 minutes), thereby allowing nickel, cobalt, or manganese ions to react with the extractant. The extraction is carried out so that a temperature of the aqueous phase is ordinary temperature (e.g., 15 to 25°C) to 50°C, and is preferably carried out at 30 to 40°C for reasons of extraction speed, phase separation, and evaporation of the organic solvent. The combined organic phase and aqueous phase are separated by a settler based on a difference in specific gravity. The solvent extraction may be repeatedly performed, and may be performed in a multi-stage manner, for example, such that the organic phase and the aqueous phase are brought into countercurrent contact. An O/A ratio (volume ratio of the organic phase to the aqueous phase) depends on the contents of the metals to be extracted, but it is generally 0.1 to 10, and preferably 1 to 5, in view of operation in a mixer settler. In addition, in the steps of stripping, scavenging, and recovering neodecanoic acid as described below, the aqueous phase is preferably maintained at the same temperature as described above.

When nickel is extracted from the above aqueous nickel solution with a solvent containing neodecanoic acid, an excessively high equilibrium pH will lead to extraction of lithium, whereas an excessively low equilibrium pH will lead to a decrease in an extraction rate of nickel. Therefore, the equilibrium pH is preferably 6 to 8, and more preferably 6.5 to 7.5. Further, in the case of the multi-stage manner as described above, the equilibrium pH when the aqueous phase is finally brought into contact with the organic phase is preferably 6 to 8, and more preferably 6.5 to 7.5. During nickel extraction, hydrogen ions are released from the extractant, so that the pH of the solution decreases. Therefore, an alkaline agent may be added to extract nickel while maintaining the pH. Examples of the alkaline agent that can be used herein include sodium hydroxide, sodium carbonate, and aqueous ammonia. However, in that pH range, the solubility of neodecanoic acid in water is higher, so that neodecanoic acid is easily transferred from the organic phase to the aqueous phase during extraction. The neodecanoic acid that has been transferred to the aqueous phase is recovered in a recovery step as described below.

When cobalt is extracted from the above aqueous cobalt solution with a solvent containing neodecanoic acid, an excessively high equilibrium pH will lead to extraction of magnesium, whereas an excessively low equilibrium pH will lead to a decrease in an extraction rate, and so it is preferably 6 to 8, and even more preferably 6 to 7. Furthermore, in the case of the multi-stage manner as described above, the equilibrium pH when the aqueous phase is finally brought into contact with the organic phase is preferably 6 to 8, and even more preferably 6 to 7. Even in that pH range, neodecanoic acid is easily transferred from the organic phase to the aqueous phase during extraction, so that the neodecanoic acid that has been transferred to the aqueous phase is recovered in the recovery step as described below.

The equilibrium pH when manganese is extracted from the above aqueous manganese solution with a solvent containing neodecanoic acid is preferably 6 to 8, and even more preferably 6.5 to 8 from the viewpoint of extracting a larger amount of manganese while suppressing the extraction of impurities. Furthermore, in the case of using the multi-stage manner as described above, the equilibrium pH when the aqueous phase is finally brought into contact with the organic phase is preferably 6 to 8, and even more preferably 6.5 to 8. Even in that pH range, neodecanoic acid is easily transferred from the organic phase to the aqueous phase during extraction, so that the neodecanoic acid that has been transferred to the aqueous phase is recovered in the recovery step as described below.

When cobalt is extracted from the above aqueous nickel-cobalt solution with a solvent containing a phosphonate ester-based extractant, the equilibrium pH is about 6, but depending on the operation, it may vary between about 6 and 8. Even in that pH range, the phosphonate ester-based extractant is easily transferred from the organic phase to the aqueous phase during extraction, so that the phosphonate ester-based extractant that has been transferred to the aqueous phase is recovered in the recovery step described below.

After extraction, the solvent (organic phase) containing metals such as nickel can be subjected to stripping. The stripping can be carried out by using an acidic aqueous solution such as sulfuric acid or hydrochloric acid, and stirring and mixing it with a mixer or the like (e.g., at 200 to 500 rpm for 5 to 60 minutes). As a stripping liquid, sulfuric acid is preferably used for the reasons of product quality, prevention of equipment corrosion, and a chloride ion concentration in the wastewater. The pH during stripping is preferably 1.0 to 4.0, and more preferably 1.5 to 2.0. The O/A ratio is not particularly limited, but in view of operation in a mixer settler, it is generally 0.1 to 10. By stripping, most of the metals can be transferred to the aqueous phase. This allows the metals transferred to the aqueous phase to be further treated by crystallization, electrolytic winning, or the like. For example, nickel and cobalt transferred to the aqueous phase by stripping can be recovered by precipitating nickel salts and cobalt salts by crystallization. It is also possible to recover metallic nickel and metallic cobalt by electrolytic winning. In this case, the electrolyzed solution after recovery of nickel and the like can be reused as the stripping liquid.

The solvent (organic phase) after stripping can be subjected to scavenging in order to remove metals remaining in the solvent (organic phase). The scavenging can be carried out by using an acidic aqueous solution such as sulfuric acid or hydrochloric acid, and stirring and mixing it with a mixer or the like (e.g., at 200 to 500 rpm for 5 to 60 minutes). As a scavenging liquid, sulfuric acid is preferably used for reasons of product quality, prevention of equipment corrosion, and chloride ion concentration in wastewater. The pH during scavenging is preferably adjusted to about -1.0 to 1.0. The O/A ratio is not particularly limited, but it is generally 0.1 to 10 in view of operation in a mixer settler. By scavenging, many of the metals remaining in the solvent (organic phase) after stripping of metals such as nickel can be transferred to the aqueous phase. This allows the solvent to be reused.

To the lithium-containing aqueous solution (extracted solution) after separating nickel can be added an alkaline agent, and then a carbon dioxide gas can be injected or a carbonating agent can be added to precipitate lithium carbonate, which can be recovered. Sodium hydroxide or aqueous ammonia can be used as the alkaline agent. Lithium carbonate can be efficiently produced by maintaining the pH at 8 to 11 when injecting the carbon dioxide gas or adding the carbonating agent. Further, since the pH decreases with the production of lithium carbonate when injecting the carbon dioxide gas, the recovery rate of lithium can be improved by adding an appropriate alkali to maintain the pH at 8 to 11 during carbonation.

The TOC in the extracted solution after extracting the metals in the solvent extraction step is preferably 200 mg/L or more. Under these conditions, the effect of transferring neodecanoic acid to the solvent side is expected by the recovery step as described below. Furthermore, the TOC in the extracted solution is more preferably 440 mg/L or more. Under these conditions, the extracted solution after extracting the metals contains a large amount of neodecanoic acid, so that the neodecanoic acid can be efficiently transferred to the solvent side by the recovery step as described below.

The solvent extraction step includes a plurality of extraction steps, in which the solvent and the aqueous metal solution used in the solvent extraction step undergo the plurality of extraction steps in the reversed order to each other, and it is preferable that the equilibrium pH in the last extraction step that is undergone by the aqueous metal solution among the plurality of extraction steps is 6 to 8. Under these conditions, the extracted solution after extraction of the metals will contain a large amount of neodecanoic acid or phosphonate ester-based extractant, so that the neodecanoic acid and the phosphonate ester-based extractant can be efficiently transferred to the solvent side by the recovery step as described below.

When the solvent extraction step as described above is carried out, an aqueous solution containing neodecanoic acid or a phosphonate ester-based extractant is obtained as the extracted solution. The aqueous solution containing neodecanoic acid or the phosphonate ester-based extractant is subjected to the recovery step as described below. The aqueous solution before contacting with the solvent in the recovery step may have a pH of 6 to 8.

### <Recovery Step>

In the recovery step, the neodecanoic acid or the phosphonate ester-based extractant is recovered from the aqueous solution (extracted solution) containing the neodecanoic acid or the phosphonate ester-based extractant produced by the solvent extraction step. Since the solubility of neodecanoic acid or phosphonate ester-based extractant in water depends on pH, the extractant can be recovered from the aqueous solution by adjusting the equilibrium pH when recovering these extractants by adding an acid such as sulfuric acid solution.

The recovery step is preferably carried out under conditions of an equilibrium pH lower than that during extraction in the solvent extraction step. When the solvent extraction step includes a plurality of extraction steps, the recovery step is preferably carried out under conditions of an equilibrium pH lower than that in the last extraction step that is undergone by the aqueous metal solution among the plurality of extraction steps included in the solvent extraction step. On the other hand, if the equilibrium pH in the recovery step is too low, the effect is saturated and the chemical cost required for pH adjustment increases. Therefore, it is preferably 1.0 or more, and more preferably 2.0 or more. Further, when neodecanoic acid is used as the extractant, it is preferably 5.5 or less, which can increase the transferring rate of the extractant to the organic phase. When the phosphonate ester-based extractant is used as the extractant, it is preferably 5.5 or less, and more preferably 5.0 or less, for the same reason.

In the recovery step, the aqueous solution containing the neodecanoic acid or the phosphonate ester-based extractant is brought into contact with a solvent, and the neodecanoic acid or the phosphonate ester-based extractant in the aqueous solution is transferred to the solvent at the above equilibrium pH, and the solvent is then separated from the aqueous phase, so that the neodecanoic acid or the phosphonate ester-based extractant can be recovered into the solvent. In the example shown in FIG. 2, the solvent after scavenging and the aqueous solution containing the neodecanoic acid or the phosphonate ester-based extractant, which is the aqueous phase after extraction 1, are sent to the recovery step, where the solvent and the aqueous solution are brought into contact with each other by mixing or the like, and adjusted to the above equilibrium pH. This allows the neodecanoic acid or the phosphonate ester-based extractant in the aqueous solution to be transferred to the solvent. Then, the solvent is separated from the aqueous phase by gravity separation or the like, and the solvent containing the neodecanoic acid or the phosphonate ester-based extractant is then used in extraction 1.

Alternatively, the neodecanoic acid or the phosphonate ester-based extractant can be separated from the aqueous solution containing the neodecanoic acid or the phosphonate ester-based extractant at the above equilibrium pH, and the neodecanoic acid or the phosphonate ester-based extractant can be recovered. More specifically, as illustrated in FIG. 3, the aqueous solution containing the neodecanoic acid or the phosphonate ester-based extractant, which is the aqueous phase after extraction 1, is sent to a recovery step, and in the recovery step, the aqueous solution is adjusted to the above equilibrium pH by adding sulfuric acid or the like. Here, in contrast to FIG. 2, the aqueous solution is sent to the recovery step alone without contacting with a solvent. Then, by performing gravity separation or the like, the neodecanoic acid or the phosphonate ester-based extractant is separated from the aqueous solution. The neodecanoic acid or the phosphonate ester-based extractant thus obtained can be used as an organic phase in extraction 1.

In the example shown in Fig. 3, the organic phase obtained in the recovery step is only that recovered from the aqueous solution, and the amount is not very large or is miner. In this regard, if necessary, an organic phase tank can be provided between the scavenging and the extraction 1 so that the organic phase can be appropriately added to the extraction 1 depending on the amount of the organic phase sent from the recovery step to the extraction 1, and the organic phase after the scavenging can be stored in the organic phase tank.

As shown in FIG. 2, when the neodecanoic acid or the phosphonate ester-based extractant is recovered by bringing the aqueous solution into contact with a solvent, it is preferable that the solvent used in the recovery step contains the same neodecanoic acid or phosphonate ester-based extractant as that contained in the solvent used in the solvent extraction step. By doing so, these extractants can be easily reused.

Also, as shown in FIG. 2, when the aqueous solution is brought into contact with the solvent to recover the neodecanoic acid or the phosphonate ester-based extractant, the solvent used in the recovery step is preferably derived from the organic phase after being subjected to the solvent extraction step. Such a solvent is, for example, the solvent used in the solvent extraction step, which is subsequently regenerated by removing the extracted metals, for example by stripping and/or scavenging, preferably both. This allows for construction of a circulation system for the reuse of the solvent.

As described above, the solvent containing the neodecanoic acid or the phosphonate ester-based extractant recovered in the recovery step is preferably used as a solvent in the solvent extraction step. This allows the neodecanoic acid or the phosphonate ester-based extractant transferred to the aqueous phase to be smoothly reused in the same process after recovery.

As shown in FIG. 2, when the neodecanoic acid or phosphonate ester-based extractant is recovered by bringing the aqueous solution into contact with a solvent, the solvent is brought into contact with the extracted solution after the solvent extraction step while being stirred with a mixer or the like in the recovery step, thereby increasing a contact efficiency of the organic phase (solvent) with the aqueous phase (extracted solution), and improving a recovery rate of the neodecanoic acid or the phosphonate ester-based extractant. In the recovery step, the O/A ratio is not particularly limited, but it is generally 0.1 to 10 in view of operation in a mixer settler.

### [Examples]

Hereinafter, Examples of the present invention will be described, but the Examples are for illustrative purposes and are not intended to limit the present invention.

### <Preliminary Test 1: Measurement of Extraction Rate of Nickel, Cobalt, and Manganese with Neodecanoic Acid>

To determine the appropriate equilibrium pH for solvent extraction of nickel, cobalt, and manganese in an aqueous solution, a solvent extraction was performed for an aqueous metal solution with neodecanoic acid, and the extraction rate of each metal was measured when the equilibrium pH was changed.

As the aqueous phase, an aqueous metal solution containing nickel at a concentration of 31 g/L, cobalt at 10 g/L, and manganese at 10 g/L was prepared. As the organic phase, a solvent containing 25% by volume of VA-10 and 75% by volume of Shellsol D70 was used. These were mixed so that the O/A ratio was 1, and stirring was performed while adjusting the pH as needed. The aqueous phase and the organic phase were separated by leaving to stand, and the extraction rate was calculated from the amounts of metals before and after the solvent extraction.

The results are shown in FIG. 1. FIG. 1 is a graph showing the relationship between the equilibrium pH and the extraction rate of each metal when nickel, cobalt and manganese are extracted. The extraction rate of each metal into the solvent was calculated from the ratio of the amount calculated from the ion concentration and the liquid volume of the stripped solution obtained by performing stripping on the solvent to the amount calculated from the ion concentration and the liquid volume of the aqueous metal solution before solvent extraction.

It is found from FIG. 1 that, for both nickel and cobalt, an extraction rate of about 50% is obtained at an equilibrium pH of 6. It is also found that the extraction rate for manganese begins to increase at an equilibrium pH of 6, and an extraction rate of 50% or more is obtained at a pH of 6.5. In other words, it was confirmed that when at least one of nickel, cobalt, and manganese was solvent-extracted with neodecanoic acid, the equilibrium pH was preferably 6 or more.

### <Preliminary Test 2: Determination of Amount of Dissolved Neodecanoic Acid in Aqueous Solution by Measurement of TOC>

TOC (total organic carbon) is known as an index for expressing the total amount of organic substances present in water by the amount of carbon. Here, to verify whether the amount of dissolved neodecanoic acid in an aqueous solution can be determined by TOC, the TOC value of an aqueous solution that did not contain neodecanoic acid (an aqueous solution separated from a solvent that did not contain neodecanoic acid after mixing and stirring it with pure water) was compared with the TOC value of an aqueous solution containing neodecanoic acid.

An aqueous solution that did not contain neodecanoic acid was prepared under the following conditions. Pure water was prepared as the aqueous phase, and Shellsol D70 was prepared as the organic phase. These were mixed and stirred so that the O/A ratio was 1. The aqueous phase and the organic phase were then separated by leaving to stand. The separated aqueous phase was used as the aqueous solution that did not contain neodecanoic acid.

The aqueous solution containing neodecanoic acid was prepared as follows. Copper, iron, aluminum, manganese, and cobalt were separated from the leached solution obtained by sulfuric acid leaching of waste materials containing cathode active materials for lithium ion batteries through solvent extraction, neutralization, and sulfurization. Nickel was finally separated by solvent extraction using VA-10 as neodecanoic acid to obtain an extracted solution, which was used as the aqueous solution containing neodecanoic acid.

Finally, the TOCs of the aqueous solution that did not contain neodecanoic acid and the aqueous solution containing neodecanoic acid were measured. The TOC was measured using a total organic carbon meter (Shimadzu Corporation).

The results are shown in Table 1. The aqueous solution that did not contain neodecanoic acid had a TOC of 66 mg/L, confirming that it contained a predetermined amount of Shellsol D70. On the other hand, the TOC of the aqueous solution containing neodecanoic acid was significantly higher than 66 mg/L, and was 670 mg/L. This confirmed that when an aqueous solution contains neodecanoic acid, the TOC becomes high, that is, it is possible to indirectly determine the amount of dissolved neodecanoic acid in the aqueous solution by measuring the TOC.

**[Table 1]**

| | pH | TOC (mg/L) |
|---|---|---|
| Pure Water (Before Mixing/Stirring) | 5.8 | 0 |
| Aqueous Solution That Did Not Contain Neodecanoic Acid (After Mixing/Stirring) | 6.1 | 66 |
| Aqueous Solution Containing Neodecanoic Acid | 7.2 | 670 |

### <Preliminary Test 3: Measurement of Solubility of Various Extractants in Aqueous Phase during Solvent Extraction>

To determine a difference in solubility in the aqueous phase due to differences of extractants during solvent extraction, the TOC of the aqueous phase was measured when various extractants were used to perform solvent extraction on an aqueous metal solution, and concentrations of the extractants were calculated.

As the aqueous phase, an aqueous metal solution containing nickel at a concentration of 10 g/L was prepared. As the organic phase, three types of solvents were used: a solvent containing 25% by volume of di-2-ethylhexyl phosphoric acid (trade name: D2EHPA) and 75% by volume of Shellsol D70; a solvent containing 25% by volume of PC-88A and 75% by volume of Shellsol D70; and a solvent containing 25% by volume of VA-10 and 75% by volume of Shellsol D70. The aqueous phase and one of the above organic phases were mixed so that the O/A ratio was 1, and the mixture was stirred for 20 minutes with a shaker while adjusting the equilibrium pH to 7. The aqueous phase and the organic phase were then separated by leaving the mixture to stand. Finally, the TOC of the separated aqueous phase was measured. As with Preliminary Test 2, the TOC was measured using a total organic carbon meter (manufactured by Shimadzu Corporation). Then, the concentration of the extractant dissolved in the aqueous phase was calculated based on the TOC, the molecular weight and specific gravity of each extractant. It should be noted that although the phenomenon of an increase in TOC due to migration of Shellsol D70 to the aqueous phase was confirmed in Preliminary Test 2, the effect was minor as compared to the increase in TOC due to migration of the extractant to the aqueous phase, so that the calculations herein did not take into account the increase in TOC due to migration of Shellsol D70. Such a test was carried out for each of the three types of organic phases.

The results are shown in Table 2. It was confirmed that the higher solubility of the extractant in the aqueous phase when PC-88A or VA-10 was used as the extractant than that when D2EHPA was used as the extractant.

This confirmed that when the neodecanoic acid or the phosphonate ester-based extractant is used as an extractant, a significant amount of the extractant could be dissolved in the aqueous phase and be lost.

**[Table 2]**

| Eextractant | TOC (mg/L) | Concentration of Extractant Dissolved in Aqueous Phase (mol/L) |
|---|---|---|
| D2EHPA | 180 | 0.001 |
| PC-8 8A | 1900 | 0.010 |
| VA-10 | 2500 | 0.021 |

### <Example 1: Verification of pH Dependency of Solubility of Neodecanoic Acid in Water >

Next, to verify whether the solubility of neodecanoic acid in water depends on pH, the TOC was measured when the pH of an aqueous solution containing neodecanoic acid was changed.

An aqueous solution containing neodecanoic acid was prepared by leaching waste materials containing cathode active materials for lithium ion batteries with sulfuric acid, from which copper, iron, aluminum, manganese and cobalt were separated via solvent extraction, neutralization and sulfurization processes, and finally an extracted solution was prepared, which separated nickel by solvent extraction using VA-10 as neodecanoic acid.

To the above extracted solution was added 400 g/L of sulfuric acid, and the TOC in the extracted solution was measured when the pH was changed from 7.2 to 0.6. As with the preliminary test, TOC was measured using a total organic carbon meter (manufactured by Shimadzu Corporation).

The results are shown in Table 3. It was newly found that the TOC rapidly decreased when the pH was 5.5 or less. In other words, it was found that VA-10 dissolved in the extracted solution was separated. Further, since the TOC was less than 200 mg/L under all conditions of pH 5.5 or less, it is found that when the TOC of the aqueous solution containing at least neodecanoic acid is 200 mg/L or more, at least a part of the neodecanoic acid dissolved in the aqueous solution can be separated by setting the pH to 5.5 or less. At this time, it was also found that an oily layer was formed on the extracted solution. The reason why the oily layer is formed is not necessarily clear, but it is believed that the solubility of VA-10 dissolved in the extracted solution decreased with a decrease in the pH, so that VA-10 was separated on the extracted solution due to a difference between specific gravities of VA-10 and the extracted solution.

**[Table 3]**

| pH | TOC (mg/L) |
|---|---|
| 7.2 | 670 |
| 5.5 | 151 |
| 2.8 | 172 |
| 1.9 | 128 |
| 1.2 | 122 |
| 0.6 | 134 |

### <Example 2: Verification of Possibility of Recovering Neodecanoic Acid by Contact with Solvent>

Next, to verify whether neodecanoic acid can be recovered by bringing an aqueous solution containing neodecanoic acid into contact with a solvent, the aqueous solution containing neodecanoic acid was brought into contact with the solvent and the TOC was measured when the pH and O/A ratio were changed.

An aqueous solution containing neodecanoic acid was prepared by leaching waste materials containing cathode active materials for lithium ion batteries with sulfuric acid, from which copper, iron, aluminum, manganese and cobalt were separated via solvent extraction, neutralization and sulfurization processes, and finally an extracted solution was prepared, which separated nickel by solvent extraction using VA-10 as neodecanoic acid. Also, Shellsol D70 was prepared as a solvent.

The solution (aqueous phase) and the solvent (organic phase) were brought into contact with each other and stirred to a predetermined O/A ratio. The aqueous phase and the organic phase were then separated by leaving the mixture to stand. When adjusting the pH, 2 g/L of sulfuric acid was added as needed. The TOC in the extracted solution was measured when the pH and the O/A ratio were thus changed. As with the preliminary test, the TOC was measured using a total organic carbon meter (manufactured by Shimadzu Corporation).

The results are shown in Table 4. It was confirmed that when the equilibrium pH during solvent extraction was 5.0 (pH 5.5 or less), the TOC rapidly decreased. In other words, it was found that VA-10 dissolved in the extracted solution migrated to the organic phase. In addition, it was confirmed that the TOC decreased under all conditions where the O/A ratio was changed, while the O/A ratio was changed with the pH fixed at 5.0.

**[Table 4]**

| | pH. | O/A Ratio | TOC (mg/L) |
|---|---|---|---|
| Extracted Solution (before Contact with Solvent) | 6.7 | - | 440 |
| Extracted Solution (after Contact with Solvent) | 8.3 | 1 | 373 |
| | 5.0 | 1 | 81 |
| | 5.0 | 0.75 | 81 |
| | 5.0 | 0.5 | 83 |
| | 5.0 | 0.25 | 83 |

### <Example 3: Verification of Application Effect of Neodecanoic acid to Nickel Recovery Process>

Next, to verify the application effect when a neodecanoic acid recovery step is introduced into a nickel recovery process, the neodecanoic acid recovery step was carried out by bringing a nickel extracted solution as described below into contact with an organic phase that recovered nickel, and the TOCs of the nickel extracted solutions before and after the neodecanoic acid recovery step were measured.

The flow chart of such a test is shown in FIG. 2. Here, copper, iron, aluminum and manganese were separated from the leached solution obtained by sulfuric acid leaching of waste materials including cathode active materials for lithium ion batteries through solvent extraction, neutralization, and sulfurization processes, and the like, and nickel was finally solvent-extracted from the aqueous metal solution (cobalt extracted solution) obtained after cobalt was separated by solvent extraction, as shown in FIG. 2.

The nickel recovery process in this test will be described step by step. First, nickel was extracted from the cobalt extracted solution, which was the aqueous metal solution to be processed, by a solvent extraction step. Specifically, the cobalt extracted solution was subjected to two-stage solvent extraction in which the organic phase and the aqueous phase were brought into countercurrent contact with each other in the steps of extraction 1 and extraction 2. In the step of extraction 1, the O/A ratio was 1 and the equilibrium pH was 6.9 to 7.0. In the step of extraction 2, the O/A ratio was 1 and the equilibrium pH was 6.6 to 6.8. The equilibrium pH in each extraction stage was adjusted by adding a sodium hydroxide solution as needed. As the organic phase, an organic phase containing 25% by volume of VA-10 and 75% by volume of Shellsol D70 was used for both extraction 1 and extraction 2.

After the two-stage solvent extraction, stripping and scavenging were carried out on the organic phase that extracted nickel. In the stripping, a sulfuric acid nickel electrolyzed solution was used under conditions of an O/A ratio of 1 and a pH of 1.5 to 2.0. In the scavenging, 200 g/L of sulfuric acid was used under conditions of an O/A ratio of 1.

The organic phase after scavenging was used as a solvent, and neodecanoic acid was continuously recovered in a mixer settler (not shown) from the aqueous phase (nickel extracted solution) that was subjected to the steps of extraction 1 and extraction 2. The recovery condition was an O/A ratio of 1. No pH adjustment was performed by adding sulfuric acid or the like.

The TOCs in the nickel extracted solutions before and after the recovery of neodecanoic acid were measured. As with the preliminary test, the TOC was measured using a total organic carbon meter (manufactured by Shimadzu Corporation).

The results are shown in Table 5. The aqueous phase (nickel extracted solution) after the steps of extraction 1 and extraction 2 had a pH of 6.7 and a TOC of 440 mg/L, but after the neodecanoic acid recovery step, the pH was reduced to 4.1 (pH 5.5 or less) and the TOC was reduced to 87 mg/L. In other words, it is understandable that VA-10 migrated to the organic phase.

The organic phase after recovering neodecanoic acid can be used as an extractant in extraction 1 after appropriate component adjustment. Thus, according to the present invention, the extractant can be recovered while recycling the recovered extractant.

**[Table 5]**

| | pH. | TOC (mg/L) |
|---|---|---|
| Nickel Extracted Solution (before Neodecanoic Acid Recovery Step) | 6.7 | 440 |
| Nickel Extracted Solution (after Neodecanoic Acid Recovery Step) | 4.1 | 87 |

<Example 4: Verification of Application Effect of Phosphonate Ester-Based Extractant to Cobalt Recovery Process>

Finally, to verify an effect of a change in equilibrium pH on the solubility of the extractant in an aqueous phase when extracting cobalt from the aqueous metal solution by solvent extraction using a phosphonate ester-based extractant, the equilibrium pH of the aqueous phase was adjusted when solvent extraction was performed on the aqueous metal solution, and the TOC was measured.

As the aqueous phase, an aqueous metal solution containing cobalt at a concentration of 10 g/L was prepared, and as the organic phase, a solvent containing 25% by volume of PC-88A and 75% by volume of Shellsol D70 was used.

These were mixed so that the O/A ratio was 1, and the mixture was stirred to perform solvent extraction, thereby extracting cobalt. The equilibrium pH during the solvent extraction was appropriately adjusted. The aqueous phase and the organic phase were then separated by leaving them to stand, and the TOC of the separated aqueous phase (cobalt extracted solution) was measured. As with the preliminary test, the TOC was measured using a total organic carbon meter (manufactured by Shimadzu Corporation).

The results are shown in Table 6. It was confirmed that by setting the equilibrium pH during solvent extraction to 5.0 or less, the TOC showed a lower value. In other words, it is found that the dissolution of PC-88A in the cobalt extracted solution was suppressed.

This indicates that even if a large amount of PC-88A is dissolved in the aqueous solution, it is possible to recover the phosphonate ester-based extractant by adjusting the pH of the aqueous solution to at least 5.0 or less and bringing it into contact with a solvent.

**[Table 6]**

| | pH | TOC (mg/L) |
|---|---|---|
| Cobalt Extracted solution | 5.0 | 71 |
| | 4.5 | 82 |

## Claims

1. A method for recovering neodecanoic acid or a phosphonate ester-based extractant from an aqueous solution comprising the neodecanoic acid or the phosphonate ester-based extractant,
wherein an equilibrium pH is 5.5 or less when the neodecanoic acid or the phosphonate ester-based extractant is recovered.

2. The method for recovering an extractant in an aqueous solution according to claim 1, wherein the neodecanoic acid or the phosphonate ester-based extractant is separated from the aqueous solution at the equilibrium pH, and the neodecanoic acid or the phosphonate ester-based extractant is recovered.

3. The method for recovering an extractant in an aqueous solution according to claim 1, wherein the aqueous solution is brought into contact with a solvent, the neodecanoic acid or the phosphonate ester-based extractant is transferred from the aqueous solution to the solvent at the equilibrium pH, and the solvent is then separated and the neodecanoic acid or the phosphonate ester-based extractant is recovered into the solvent.

4. The method for recovering an extractant in an aqueous solution according to any one of claims 1 to 3, wherein the equilibrium pH during recovery of the phosphonate ester-based extractant is 5.0 or less.

5. The method for recovering an extractant in an aqueous solution according to any one of claims 1 to 3, wherein a TOC in the aqueous solution is 200 mg/L or more.

6. The method for recovering an extractant in an aqueous solution according to any one of claims 1 to 3, wherein the aqueous solution has a pH of 6 to 8 before recovering the neodecanoic acid or the phosphonate ester-based extractant.

7. A method for separating and recovering metals from an aqueous metal solution, the method comprising:
a solvent extraction step of subjecting the aqueous metal solution to solvent extraction with a solvent comprising neodecanoic acid or a phosphonate ester-based extractant to extract metals contained in the aqueous metal solution; and
a recovery step of recovering the neodecanoic acid or the phosphonate ester-based extractant from an extracted solution obtained after extracting the metals in the solvent extraction step,
wherein an equilibrium pH during recovery in the recovery step is lower than an equilibrium pH during extraction in the solvent extraction step.

8. The method for separating and recovering metals from an aqueous metal solution according to claim 7, wherein, in the recovery step, the neodecanoic acid or the phosphonate ester-based extractant is separated from the extracted solution at the equilibrium pH, and the neodecanoic acid or the phosphonate ester-based extractant is recovered.

9. The method for separating and recovering metals from an aqueous metal solution according to claim 7, wherein, in the recovery step, the extracted solution is brought into contact with a solvent, and the neodecanoic acid or the phosphonate ester-based extractant is transferred from the extracted solution to the solvent at the equilibrium pH, and the solvent is then separated and the neodecanoic acid or the phosphonate ester-based extractant is recovered into the solvent.

10. The method for separating and recovering metals from an aqueous metal solution according to claim 9, wherein the solvent used in the recovery step comprises the same neodecanoic acid or phosphonate ester-based extractant as the neodecanoic acid or the phosphonate ester-based extractant contained in the solvent used in the solvent extraction step.

11. The method for separating and recovering metals from an aqueous metal solution according to any one of claims 7 to 10,
wherein the solvent used in the solvent extraction step comprises neodecanoic acid, and
wherein the equilibrium pH during recovery in the recovery step is 5.5 or less.

12. The method for separating and recovering metals from an aqueous metal solution according to any one of claims 7 to 10,
wherein the solvent used in the solvent extraction step comprises a phosphonate ester-based extractant, and
wherein the equilibrium pH during recovery in the recovery step is 5.0 or less.

13. The method for separating and recovering metals from an aqueous metal solution according to any one of claims 7 to 10, wherein a TOC in the extracted solution after extracting the metals in the solvent extraction step is 200 mg/L or more.

14. The method for separating and recovering metals from an aqueous metal solution according to any one of claims 7 to 10, wherein the extracted solution after extracting the metals in the solvent extraction step has a pH of 6 to 8.

15. The method for separating and recovering metals from an aqueous metal solution according to claim 14,
wherein the solvent extraction step comprises a plurality of extraction steps,
wherein the solvent and the aqueous metal solution used in the solvent extraction step undergo the plurality of extraction steps in the reversed order to each other, and
wherein the equilibrium pH in the last extraction step that is undergone by the aqueous metal solution among the plurality of extraction steps is 6 to 8.

16. The method for separating and recovering metals from an aqueous metal solution according to claim 9 or 10, wherein the solvent used in the recovery step is derived from an organic phase after being subjected to the solvent extraction step.

17. The method for separating and recovering metals from an aqueous metal solution according to any one of claims 7 to 10, wherein the solvent recovered in the recovery step is used as a solvent in the solvent extraction step.
